# EUROPEAN PATENT SPECIFICATION

(11) **EP 3 146 673 B1**
(45) Date of publication and mention of the grant of the patent: **21.03.2018**
(21) Application number: 14734746.2
(22) Date of filing: 23.05.2014
(51) Int. Cl.: H04L 12/24

(54) **METHOD FOR CONNECTING A DEVICE TO A SERVER IN A NETWORK**
VERFAHREN ZUR VERBINDUNG EINER VORRICHTUNG MIT EINEM SERVER IN EINEM NETZWERK
PROCÉDÉ DE CONNEXION D'UN DISPOSITIF AVEC UN SERVEUR DANS UN RÉSEAU

(43) Date of publication of application: 29.03.2017
(73) Proprietor: NEC Corporation, Tokyo 108-8001 (JP)
(72) Inventor: PAPAGEORGIOU, Apostolos, 69117 Heidelberg (DE); BIFULCO, Roberto, 69115 Heidelberg (DE); KOVACS, Ernoe, 70619 Stuttgart (DE); KOLBE, Hans-Joerg, 64293 Darmstadt (DE)
(74) Representative: Patent- und Rechtsanwälte Ullrich & Naumann
(86) International application number: PCT/EP2014/060702
(87) International publication number: WO 2015/176775

(56) References cited:
- US-A1- 2008 289 026
- US-A1- 2009 262 382
- US-A1- 2010 315 200
- US-B2- 8 433 827

## Description

The present invention relates to a method for mounting a device at a server in a network, preferably in form of a M2M network, wherein the network comprising one or more anchors for physically attaching devices, one or more servers for mounting devices, and a network infrastructure in form of a software-defined network for connecting said anchors with said servers.

The present invention further relates to a network, preferably in form of a M2M network, wherein the network comprising one or more anchors for physically attaching devices, one or more servers for mounting devices, and a network infrastructure in form of a software-defined network for connecting said anchors with said servers.

Such a conventional method and network is disclosed in US 2009/262,382 A1.

Although applicable to devices in general, the present invention will be described with regard to M2M devices, i.e. machine-to-machine devices.

Although applicable to networks in general, the present invention will be described with regard to machine-to-machine networks.

Although applicable to any kind of network infrastructure, the present invention will be described with regard to a network infrastructure in form of a software-defined network.

In the field of home networking but also for example in buildings or facilities, small outdoor areas or the like, the need to attach M2M devices increases rapidly as it enables various services for automation, energy control entertainment, ambient-assistant living, etc..

Attaching such M2M devices to a gateway device may be performed over a wired or over a wireless channel typically using one or more of the conventional "M2M area network technologies" including for example USB, Ethernet, ZigBee, WiFi, Bluetooth, Universal Plug and Play UPnP, DECT or the like.

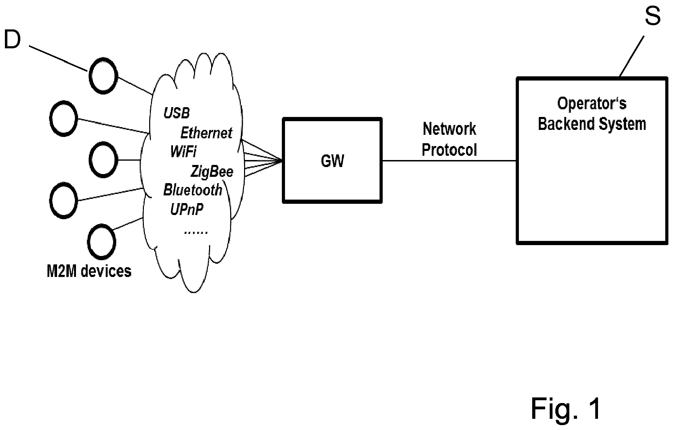

Fig. 1 shows such a conventional gateway-based machine-to-machine deployment. A plurality of M2M devices D is connected via a conventional M2M area technology like USB, Ethernet, etc. to a gateway GW. The gateway GW is connected for example via the internet using a network protocol to an operator's backend system S at which the M2M devices D are mounted. When being mounted at the backend system S the M2M devices D may then communicate with the operator's backend system S.

The growing number of M2M devices D per gateway device GW, the variety of M2M area network technologies as well as the increased expectations of users that the M2M devices work in a plug-and-play fashion and are easily integrated into their high-level applications have inter alia the following consequences: The gateway devices GW need then full-fledged networking capabilities, operating systems, drivers and sophisticated mechanisms resulting in higher costs for these gateway devices GW. Further the remote integration and management of new M2M devices D, troubleshooting and traffic control is becoming more and more complex.

To mitigate these problems the telecommunication industry has started trying to face the above mentioned issues by virtualizing the gateway device GW, for example by replacing it with a much more simpler gateway device called bridged residential gateway BRG or M2M anchor if it is only targeted to M2M devices. This bridged residential gateway simply forwards the traffic to the telecommunication operator's backend systems S without implementing all the protocols, drivers and networking functions needed for the communication with the M2M devices D. The virtual gateway vGW which handles the protocols drivers, etc. then resides in the network of the operator's backend system S.

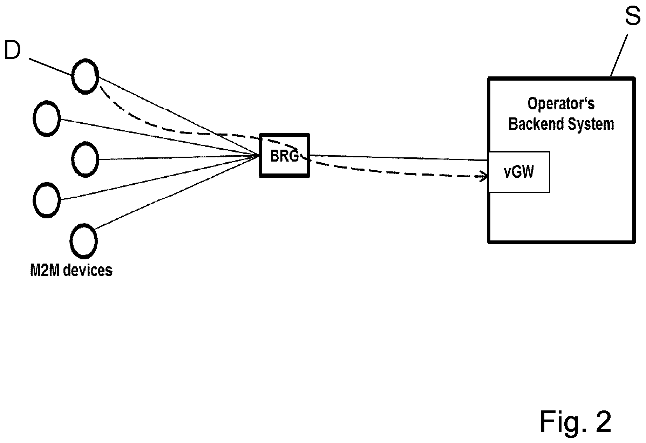

Such a situation is shown in Fig. 2 where devices D are attached to the bridged residential gateway BRG which forwards the traffic to the virtual gateway vGW within the operator's backend system S providing the protocols drivers and networking functions needed for the communication with the M2M device D.

One of the conventional methods that can be employed to support such a gateway virtualization is the so-called protocol virtualization. With protocol virtualization the M2M device D is virtually mounted to the operating system of the virtual gateway vGW as if it was directly attached to it.

Since protocol virtualization is usually applied for simple remote access of a user to its user devices upon a specific pre-configured system and when applied massively in the context of a gateway virtualization, the protocol virtualization causes the following problems:
- The selection of a backend server to which the M2M device want to become attached needs to be preconfigured,
- the selection of the backend server is static and
- the operator of the network infrastructure does usually not know which backend servers can handle technology of newly appearing M2M devices, since the M2M device itself cannot be identified by looking at the network flows.

When for example two different M2M devices are attached to the same M2M anchor GW, the drivers to mount the first M2M device are provided for a certain operating system while the drivers for the second M2M device are supported to a different operating system, then the M2M anchor needs to contact the correct backend server when performing the protocol virtualization to mount the devices at the respective backend servers.

However the M2M anchor does not know the capabilities of the different backend servers, since this is information usually only known to the network operator. Another problem which arises is, that the M2M anchor does not know about this specific M2M device attached and its requirements, since this can only be discovered by establishing a communication or a conversation with the M2M device using its drivers which are located remotely on the backend server. A third problem which arises is, that the network operator lacks any information on the identity of a given device, so that the corresponding network flows, i.e. which are generated by the protocol virtualization procedure can be directed to a given server using a redirection in the network operator's premises.

It is therefore an objective of the present invention to provide a method for mounting a device at a server in a network and a network enabling protocol virtualization together with gateway virtualization.

It is a further objective of the present invention to provide a method for mounting a device at a server in a network and a network enhancing the flexibility in particular with regard to the number and type of devices to be mounted at a server.

It is a further objective of the present invention to provide a method for mounting a device at a server in a network and a network providing a fast and efficient mounting of devices at servers.

It is an even further objective of the present invention to provide a method for mounting a device at a server in a network and a network which can be applied in multiple types of environments.

The aforementioned objectives are accomplished by a method of claim 1 and a network of claim 11.

In claim 1 a method for mounting a device at a server in a network, preferably in form of a M2M network is defined, wherein the network comprising one or more anchors for physically attaching devices, one or more servers for mounting devices, and a network infrastructure in form of a software-defined network for connecting said anchors with said servers.

According to claim 1 the method is characterized by the steps of
a) Attaching a device at an anchor,
b) Setting up a virtualized connection between the anchor and a server based on a predefined anchor configuration,
c) Encoding temporary device information into the network flow generated by said device, preferably including into the network flow for mounting,
d) Attempting to mount the device at said server,
e) Providing functions and/or data to the mounted device by said server upon successful mounting,
f) Selecting another server for mounting the device if mounting was not successful,
g) Identifying and redirecting the network flow of the said device to said selected server by installing one or more forwarding rules on one or more forwarding elements of the software defined network using the temporary device information for identification of the network flow of the mounted device.

In claim 11 a network is defined, preferably in form of a M2M network, wherein the network comprising one or more anchors for physically attaching devices, one or more servers for mounting devices, and a network infrastructure in form of a software-defined network for connecting said anchors with said servers.

According to claim 11 the network is characterized by
said anchors operable to attach devices, to set up a virtualized connection between the anchor and a server based on a predefined anchor configuration and to encode temporary device information into the network flow generated by said device, preferably including the network flow for mounting,
said servers operable to attempt to mount the device at said server, to provide functions and/or data to the mounted device by said server upon successful mounting and to notify a network controller of the software defined network upon unsuccessful mounting, and
said network controller being operable to select another server for mounting the device if mounting was not successful and to identify and redirect the network flow of the said device to said selected server by installing one or more forwarding rules on one or more forwarding elements of the software defined network using the temporary device information for identification of the network flow of the mounted device.

According to the invention it has been recognized that the network is enabled to recognize and manage the network flows related to machine-to-machine device virtualization.

According to the invention it has been further recognized that network flows related to in particular M2M device virtualization can be identified without using costly Deep Packet Inspection methods, since a deep packet inspection approach would require the deployment of the deep packet inspection functions in the network being able to analyze all the network flows at line rate in order to identify the M2M devices' network flows.

According to the invention it has been further recognized that flexibility is enhanced since dynamic changes of the devices' target server are enabled by selectively redirecting network flows originating from given devices.

In other words a system and a method is described for enabling an operator's network to dynamically redirect a traffic of virtualized devices, preferably M2M devices to servers, preferably M2M servers being appropriate to serve as "virtual host" for the given devices.

In particular the present invention can be applied in the virtual home gateway environment and is preferably based on encoding information about the device and its virtualization technology, preferably into TCP/IP packet headers, selecting virtual hosts based on their compatibility to certain virtualization techniques and using software defined networks to make this virtual host selection in a dynamic manner.

In further words the present invention provides a system and a method for enabling an operator's network to dynamically redirect a device assignment in a virtual home gateway environment. In particular virtualization protocols for "mounting" a device to a remote server are used together with gateway virtualization, server selection and traffic redirection to achieve an efficient device virtualization inside a distributed operator's network infrastructure.

In the description, preferably in the claims, an M2M device, i.e. a machine-to-machine device is a device that has a sensing/actuating or any other automatic data-generating task running without human intervention and that has connectivity to a backbone network aggregating and processing this kind of data from many sources. M2M devices can be any kind of sensor devices like smart meters, cameras, home devices and also computing devices like smartphones for example, if they are executing such a task.

Further features, advantages and preferred embodiments are described in the following sub claims.

According to a preferred embodiment information about the device, its status and/or its virtualization technology is included into the temporary device information. This allows to efficiently identify the type of the device attached at the anchor and to be mounted at a server for possible later redirection of the network flow of said device.

According to a further preferred embodiment an unambiguous value, preferably a predefined port range, is used as temporary device information. Using port ranges as identifier of the used virtualization technology provides an easy implementation while allowing a reliable identification of the virtualization technology.

According to a further preferred embodiment a network controller receives the temporary device information from the server having successfully mounted the device and said network controller installs said forwarding rules on said forwarding elements. This allows an efficient installation of forwarding rules for the respective device based in the temporary device information by the network control entity of the software defined network.

According to a further preferred embodiment one or more predefined default servers are configured in the anchor configuration for different virtualization techniques used by devices. This allows performing a redirection only in case that the preconfigured server is not available for mounting of the respective device.

According to a further preferred embodiment for each device attached at an anchor a different outgoing port for its data traffic is used. This enables an easy encoding of a device identification based on outgoing ports of an M2M anchor for example.

According to a further preferred embodiment the outgoing port number is evaluated for selecting the first server according to step b). For example packets containing data from a device using USB virtualization could be sent by a corresponding anchor to the server using an outgoing port between 4000 and 4999 since usually the addresses of the servers are hidden from the anchor which might know and use a single IP. Thus evaluating the port number can be used for "pre-selection", i.e. for choosing the first server that will attempt to mount a device that has just appeared, in particular performing the very first step of an anchor-to-backend communication.

According to a further preferred embodiment an L4-identifier of the device is evaluated by the forwarding elements and matched to installed rules for redirection of the data traffic of the device. Since in particular M2M devices are bound for their entire "lifetime" to an L4-level identifier, this L4-level-identifier can be read by the forwarding element or software defined network switches of the software defined network without using deep packet inspection. Therefore an easy identification of the devices by evaluating the L4-identifier is provided

According to a further preferred embodiment the server rejects an attach attempt of a device and/or said another server is selected based on a present and/or projected level of a constraint, preferably in form of a load. This enhances the flexibility since one or more constraints can be defined, i.e. conditions under which an attachment of a device at a server is allowed or not. The same applies for the selection of another server. This constraint can be an "actual" constraint, i.e. for example comparing an actual status of a device or a "future" constraint, i.e. a projected level of a constraint: For example if the present load level is low and therefore attachment of a device would be allowed, however the projected load level will be high in the near future, then - even an attachment would be possible at the moment - the attachment is rejected since for example other more important devices will be mounted and use the server in the future. Then the load level would be too high for attaching other devices at the moment.

According to a further preferred embodiment at the anchor the number of devices is counted for each different virtualization technology. This enables for example a global counter holding the number of already attached devices using a certain virtualization technology. This can be used for comparison with a certain threshold limiting the number of attached devices with a certain virtualization technology. For example this can be used to avoid a high number of devices to be attached when the virtualization technology needs or causes a high load at the respective server.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained.

In the drawings
- Fig. 1: shows a conventional method for attaching a device at the gateway;
- Fig. 2: shows a conventional method and a network for mounting a device at a server via a virtual gateway;
- Fig. 3: shows a method and a network according to a first embodiment of the present invention;
- Fig. 4: shows steps of a method according to a second embodiment of the present invention;
- Fig. 5: shows part of a network according to a third embodiment of the present invention;
- Fig. 6: shows part of steps of a method according to a fourth embodiment of the present invention;
- Fig. 7: shows part of a network according to fifth embodiment of the present invention;
- Fig. 8: shows steps of a method and a network according to sixth embodiment of the present invention and
- Fig. 9: shows steps of a method and a network according to a seventh embodiment of the present invention.

Fig. 1 shows a conventional method for attaching a device at the gateway.

Fig. 1 shows a conventional gateway-based machine-to-machine deployment. A plurality of M2M devices D is connected via conventional M2M area technology like USB, Ethernet, etc. to a gateway GW. The gateway GW is connected via for example the internet using a network protocol to an operators backend system S at which the M2M devices D are mounted. When being mounted the M2M devices D may then communicate with the operator's backend system S.

Fig. 2 shows a conventional method and a network for mounting a device at a server via a virtual gateway.

In Fig. 2 devices D are attached to the bridged residential gateway BRG which forwards the traffic to a virtual gateway vGW within the operators' backend system S providing the protocols drivers and networking functions needed for the communication with the M2M device D. For attaching the device and connecting it to a server for mounting a gateway device called bridged residential gateway BRG or M2M anchor if it is only targeted to M2M devices is used. This bridged residential gateway BRG simply forwards the traffic to the telecommunication operator's backend systems S without implementing all the protocols, drivers and networking functions needed for the communication with the M2M devices D.

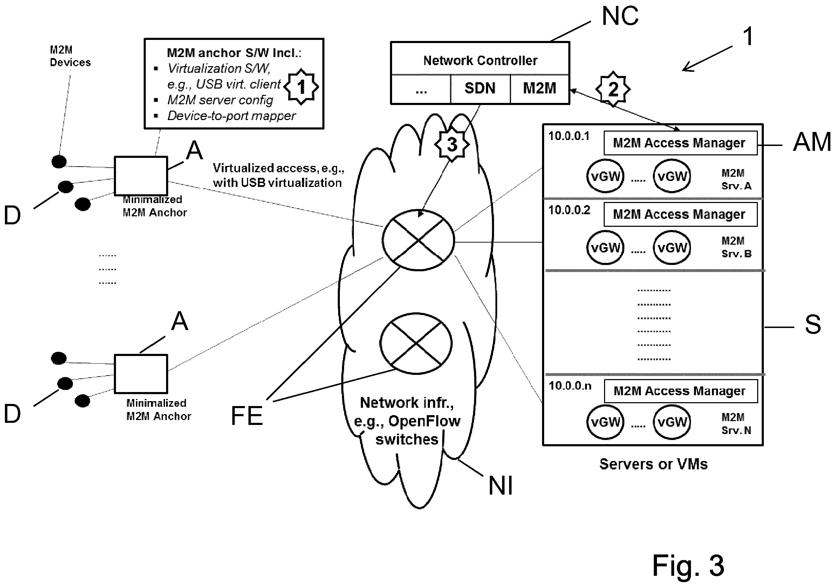

Fig. 3 shows a method and a network according to a first embodiment of the present invention.

In Fig. 3 an overview of a system according to the invention and the main interactions between its components is shown.

In Fig. 3 a plurality of M2M devices D is attached at a minimized M2M anchor A which in turn is connected via a network infrastructure NI comprising forwarding elements FE to one or more servers or virtual machines S. For controlling the forwarding elements FE in the network infrastructure NI in form of a software defined network SDN, a network controller NC is provided interacting with the forwarding elements FE for installing rules and also interacting with an M2M access manager AM in each of the servers or virtual machines S.

In detail the M2M anchor A is the physical attachment point for an M2M device D. The M2M anchor A is in charge of virtualizing the access to the M2M devices D. Further the M2M anchor A comprises a device attachment logic coupled with the M2M anchor A in order to encode a temporary devices identifier along with additional information into the headers of the packets belonging to the network flow generated by the given M2M device D.

The M2M server S is the mounting point of M2M devices D and hence it is the destination of the network flows the M2M anchor A generates as part of the process of the virtualization of an M2M device D. After mounting an M2M device D the M2M server S provides its functions and data to the application layer using an ad hoc driver/software stack in order to provide a notification about the current devices status to external entities, for example the network controller NC.

The network infrastructure NI in form of a software defined network SDN comprises forwarding elements FE exposing an interface for the configuration to the network controller NC. The network controller NC includes a software defined network flow management entity performing the network configuration required to properly steer network flows. Furthermore an M2M control logic is provided being able to interact with the M2M access manager AM at a server S. The network controller NC exploits the device attachment logic adopted by the M2M anchors in order to manage the network flows and steer a selected M2M device D towards a proper M2M server S.

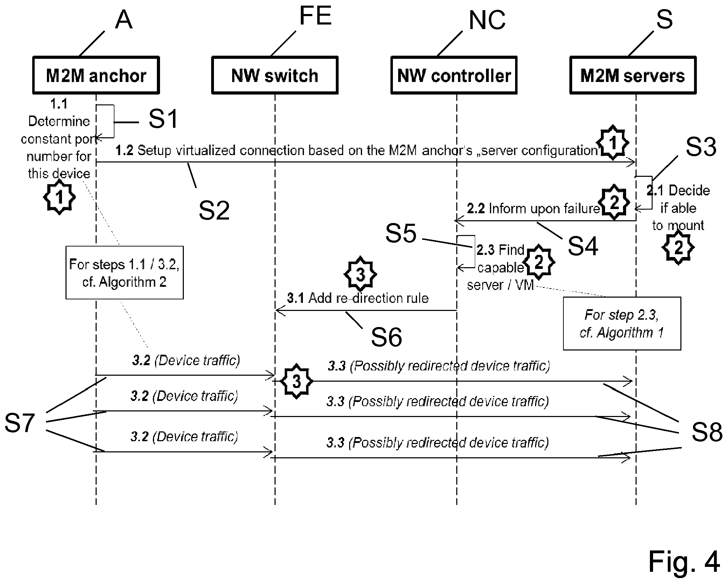

Fig. 4 shows steps of a method according to a second embodiment of the present invention.

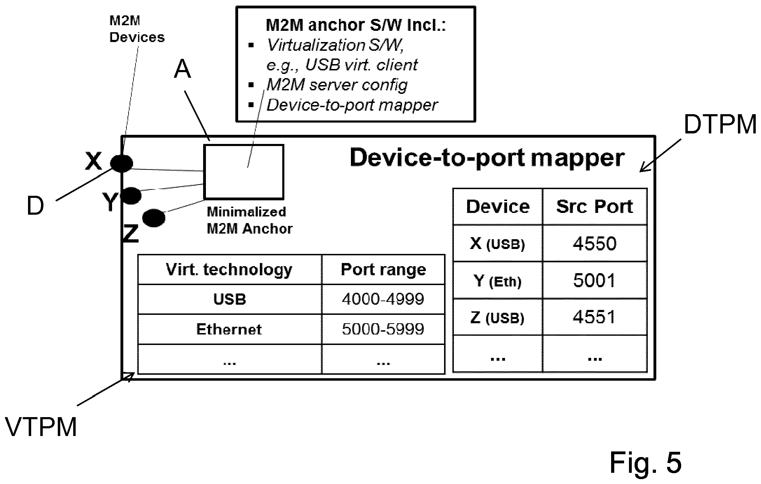

In Fig. 4 an M2M anchor A to which a device D is attached starts a M2M device protocol virtualization by determining in a first step S1 the constant port number for this device. Network packets are created used to communicate with the M2M server S where the device D will then been mounted. These packets will be tagged with an unambiguous value in the packet header, for example by using prespecified port ranges as shown in Fig. 5. The tagging will be in place until the M2M device D is disconnected. That is, only in case of a disconnection and subsequent new connection to the M2M anchor A, the same device D may acquire different tag for the network packets.

An example for how the M2M anchor handles the traffic of a newly attached device is shown in the algorithm below. The algorithm provides an M2M controller logic for performing server selection based among others on information about virtualization technologies:

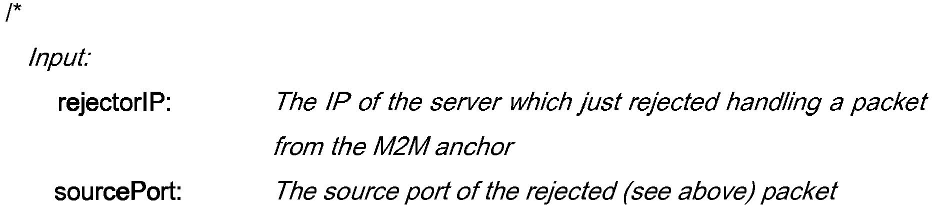

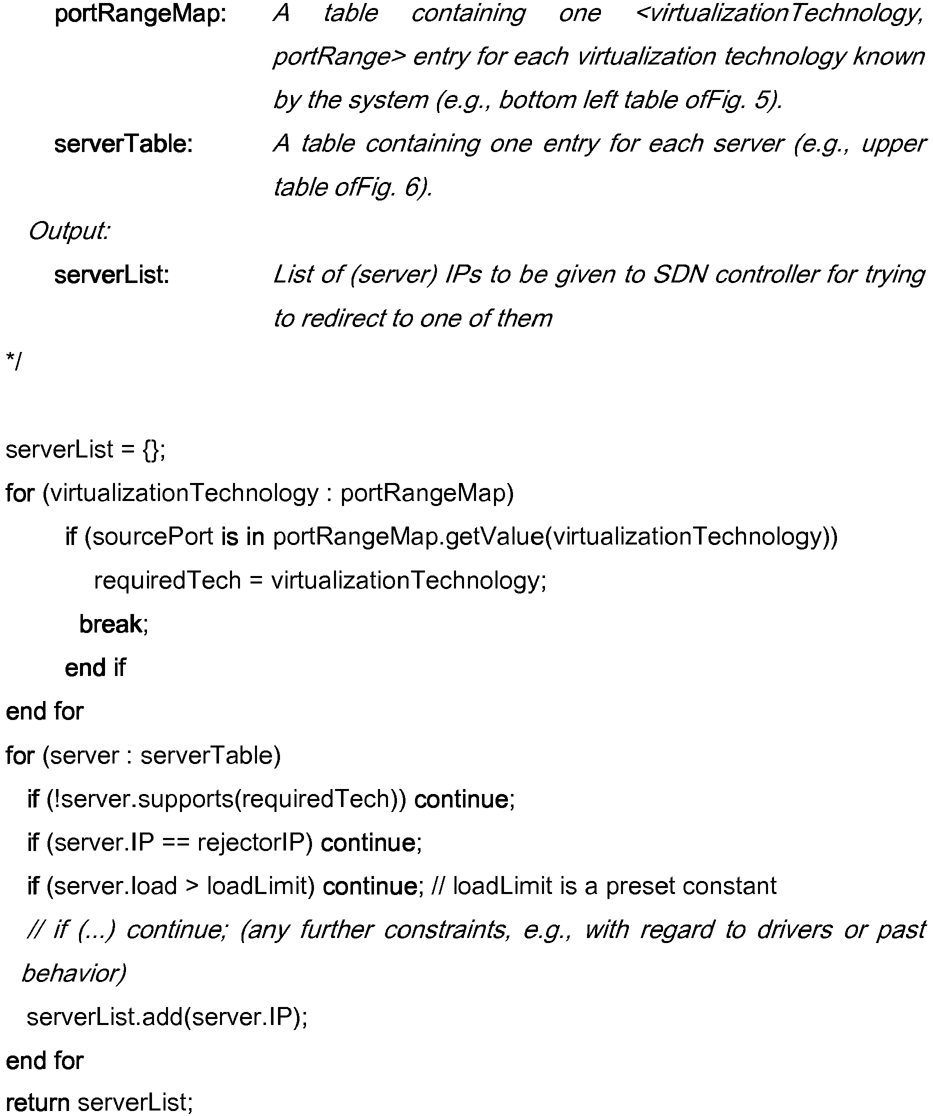

In a second step S2 the network packets are sent from the M2M anchor A to the M2M server S setting up a virtualized connection based on the M2M anchor's "server configuration" This sequence of packets is herein after referred as M2M device network flow. The network forwards the network flows by examining the values in the packets headers. Forwarding rules R are installed by the network controller NC on the forwarding elements FE which can use the tag in the network packets to extract high level information about the M2M device D according to the tagging policy implemented by the M2M anchor A.

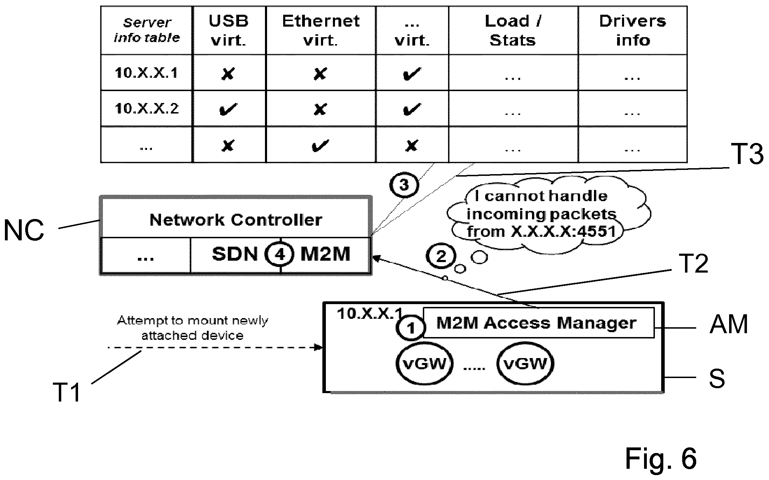

In a third step S3 the M2M server S which is selected, preferably according to a procedure illustrated in Fig. 6 attempts now to mount the M2M device D. At the end of the mounting process, the software stack of the M2M server S informs the M2M access manager AM if the mounting was successful or not. Moreover the M2M access manager AM is provided with a current tag used by the packets in the M2M devices network flow. This information is forwarded by the M2M access manager AM in a fourth step S4 to the M2M logic control in the network controller NC.

In a fifth step S5 the M2M control logic can start a process to decide if a redirection of this M2M device D trying to become mounted towards a different M2M server S is required. In the algorithm below it is described how that virtualization aware server-selection process is performed or in other words the algorithm shows a M2M anchor logic for handling device messages by encoding virtualization technology information in IP packet headers:

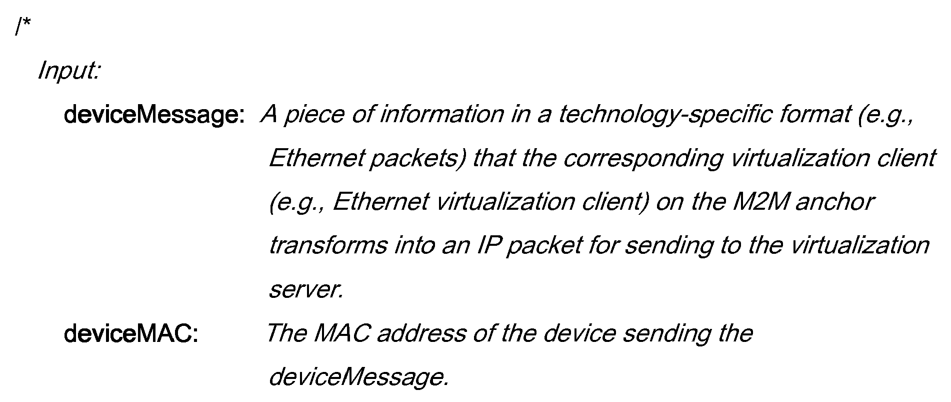

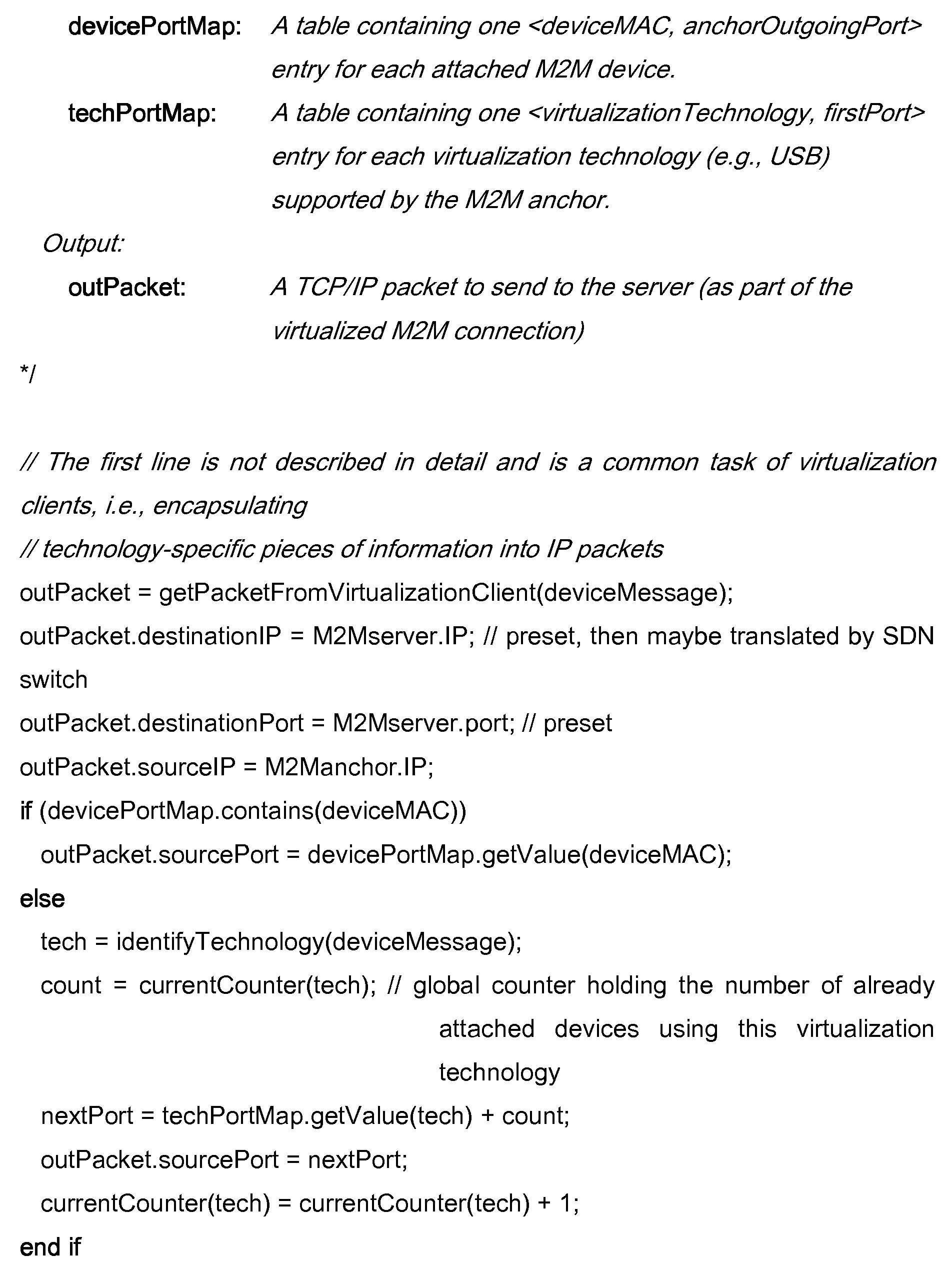

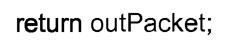

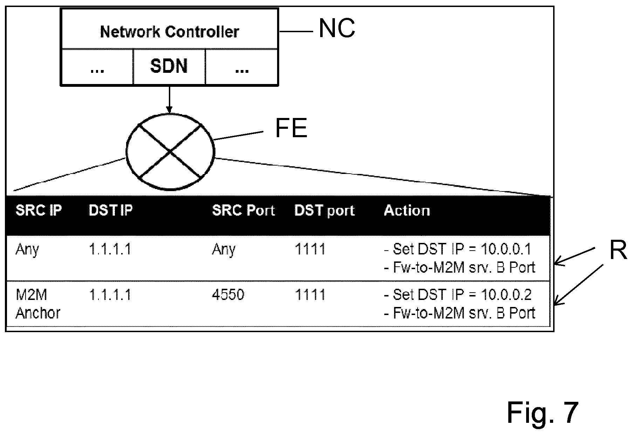

In a sixth step S6 the software defined network based configuration of M2M traffic is performed. In case the redirection is required the M2M logic control instructs the SDN flow management entity NC to redirect the M2M device's network flows towards a different M2M server S which is for example shown in Fig. 7. The M2M device's network flows can be identified using the information provided by the M2M access manager AM to the M2M control logic. This information paired with the M2M anchor device attachment logic provides an unambiguous identification of the network flow of a device. The new destination M2M server S is provided as outcome by the M2M control logic at the end of the redirection decision process. Therefore in the sixth step S6 a corresponding redirection rule R is added to the forwarding elements FE and in a seventh step S7 a corresponding device traffic via the M2M anchor A to the first forwarding element FE is then possibly redirected in an eight step S8 by the forwarding elements FE and further forwarding elements FE to the new selected M2M server S.

Fig. 5 shows part of a network according to a third embodiment of the present invention.

In Fig. 5 a device attachment logic of an M2M anchor A is shown. Devices X, Y and Z are attached at the minimalized M2M anchor A. The M2M anchor A includes a virtualization S/W, for example a USB virtualization client and further a predefined configuration for M2M servers S as well as a device-to-port mapper DTPM. The device attachment logic maps for example a certain virtual technology to a certain port range as it is shown in Fig. 5: USB is mapped to a port range between 4000 and 4999, an Ethernet attached M2M device is mapped to a port range from 5000 to 5999 and so on.

The devices X and Z use an USB virtual client whereas the device Y uses an Ethernet virtual client, the latter is mapped to a different source port in the corresponding port range: The device X using a virtual USB client uses as outgoing port at the M2M anchor A port 4550 and the device Z uses the outgoing port 4551 both lying in the port range of 4000 to 4999 for the respective USB virtual technology. The M2M device Y using an Ethernet virtualized client uses as outgoing port 5001 in the range for Ethernet virtual technology having the port range 5000 to 5999.

Therefore to summarize a source port number is selected, when a device D is attached to the M2M Anchor A. This source port number is maintained for any communication originated from the device D and destined to the M2M server S, wherein different devices have different source port numbers and wherein different virtualization technologies correspond with different port ranges. The port number may provide certain information about the used virtualization technology.

Fig. 6 shows part of a method according to a fourth embodiment of the present invention.

In Fig. 6 troubleshooting and negotiation of a device mounting as well as an M2M server selection is shown.

When a newly attached device D to the M2M anchor A tries to mount at the server S an M2M access manager AM tries in a first step T1 to mount that device D on said server.

If the M2M access manager AM comes to the conclusion that the incoming packets of this device D cannot be handled, M2M access manager AM contacts in a second step T2 the network controller NC of the software defined network SDN and triggers an M2M server selection logic in the network controller wherein implicit information about the virtualization technology is provided via the port number as mentioned before.

Then the network controller NC performs in a third step T3 a lookup in its server information table which server supports which virtual technology and the server selection logic selects a different M2M server according to information provided and preferably based on additional constraints e.g., server load, type, etc.

In a fourth step T4 the network controller NC, in particular the M2M control logic starts a process to decide the redirection of the M2M device D for mounting towards a different M2M server S is necessary. And if yes, the network controller NC with its SDN controller configures in this fourth step T4 based on the aforementioned decision the corresponding forwarding elements FE correspondingly. This configuration is shown in Fig. 7. The above mentioned algorithms for M2M anchor logic for handling device messages by encoding virtualization technology information in IP packet headers shows how the "virtualization aware server selection process" may be performed.

Fig. 7 shows part of a network according to fifth embodiment of the present invention.

In Fig. 7 a software defined network based configuration and redirection of M2M traffic is shown.

The network controller NC with its interface to the forwarding elements FE configures rules R for the forwarding. In Fig. 7 the M2M control logic instructs the SDN flow management entity, i.e. the network controller NC to redirect the M2M device's network flow, i.e. any packet destined to the M2M server address to an actual M2M server thereby translating from the IP address configured in the M2M anchor A into the M2M server real IP address towards the selected M2M server S. The M2M device's network flows can be identified using the information provided by the M2M access manager AM to the M2M control logic in the network controller NC. This information together with the M2M anchor device attachment logic provides - as mentioned also before - unambiguous identification of the flow. The new destination of the M2M server S is provided as outcome by the M2M control logic at the end of the redirection decision process.

When the M2M selection logic triggers a redirection, the network controller NC, in particular its SDN controller installs preferably a new higher priority rule in the forwarding element. This rule R then redirects the flows related to a device D.

The rules R may be provided in the form of a source IP mapped to a destination IP and corresponding source ports to destination ports. The flows related to a device D may be identified preferably using the source port to the newly selected M2M server S. When this rule R is applied then a corresponding action for a corresponding network flow is performed: For example if the source IP matches the IP address of an M2M anchor A and the source port is 4550 then a corresponding network flow is mapped to the destination IP 1.1.1.1 and port 1111 and an action is performed setting the destination IP to 10.0.0.2 and forward the network flow to the M2M server S with a port dedicated for receiving the network flow.

This rule R is based on the server selection procedure: the M2M server S being chosen to host the virtual device, i.e. to receive the packets of the channel that is used by the virtualization program for this device D, is selected based on its "virtualization support features", i.e. based on its compatibility to the used virtualization technology, its installed drivers and/or further parameters related to the device virtualization. Additional information may be taken into account for server selection, for example the ability to understand and to process data of devices with USB identifiers, its current load or the like implied in Fig. 6.

An example procedure for performing server selection was shown above in the first algorithm

Further - as for example shown in the Fig. 7 - port ranges are used as identifier of the used virtualization technology. This enables to include, for example in the header of the packets sent by the M2M anchor A, information about the used virtualization technology. Further different outgoing ports of the M2M anchor A may be used for the traffic of each different M2M device D in addition to the mapping of certain port ranges to certain virtualization technologies. As already mentioned and illustrated in Fig. 5 the packets comprising data from a device D that uses USB virtualization are sent by the M2M anchor A to the backend server S using an outgoing port between 4000 and 4999. Since usually the IP addresses of the M2M server S are hidden from the M2M anchor A the M2M anchor A might know and use a single IP address. Thus the information encoded in this port number can even be used for a "pre-selection", i.e. for choosing the first server S that will attempt to mount a M2M device D that has just appeared, i.e. performing the very first step of an M2M anchor to M2M server communication.

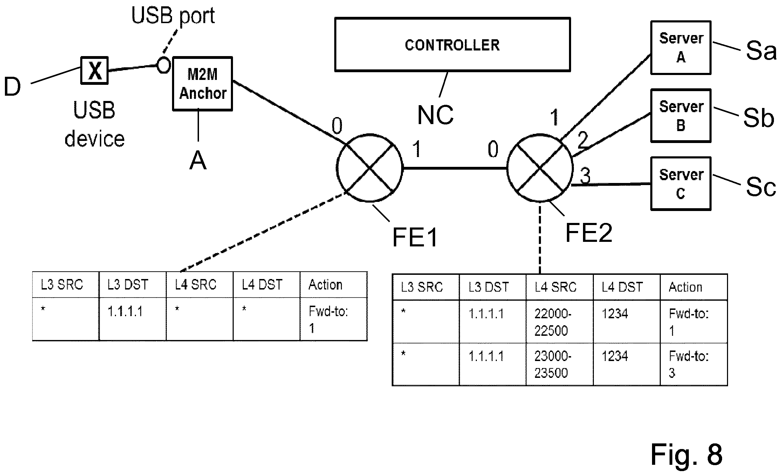

Fig. 8 shows a method and a network according to sixth embodiment of the present invention.

In Fig. 8 an example scenario for an M2M device attachment and device discovery is shown.

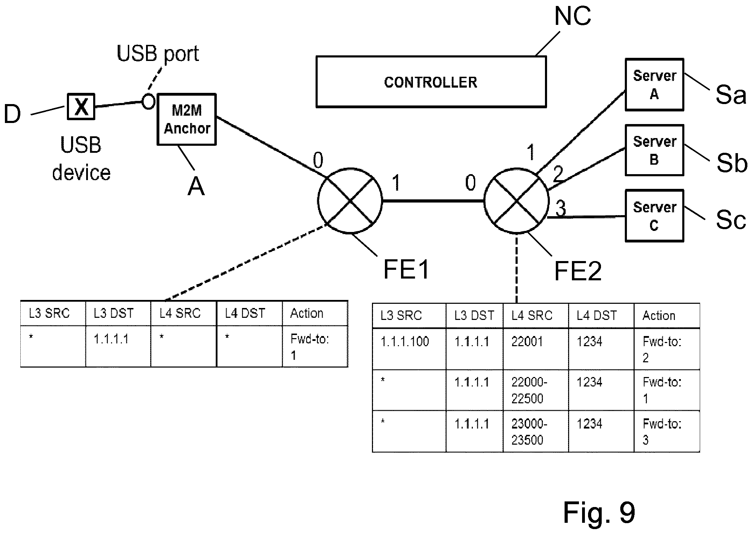

For Fig. 8 and further for Fig. 9 a device D in form of a USB device is attached to an M2M anchor A using an USB port. The following configuration parameters and variables are used:

| | |
|---|---|
| USB technology L4 port range | 22000-22500 |
| Default M2M server in M2M anchor's configuration | 1.1.1.1:1234 |
| M2M anchor IP address | 1.1.1.100 |
| USB enabled M2M servers | A,B |
| M2M servers that can support device X | B |

For mounting the USB device D the following steps are performed:
In a first step the device D is attached to the M2M anchor A.
In a second step the M2M anchor A assigns L4 port 22001 included in the USB port range to the device D.
In a third step the M2M anchor A starts up protocol virtualization by contacting server 1.1.1.1 at port 1234. The first forwarding element FE1 in form of a switch on the path forwards the packets to the next forwarding element FE2 also in form of a switch following the configuration of its forwarding entries. In the first forwarding element FE1 as L3 destination the IP address 1.1.1.1 is configured as well as an action forwarding all traffic to the second forwarding element FE2.
In a fifth step the second forwarding element FE2 on the path forwards the packets towards the server Sa, since the L4 port source is in the range between 22000 and 22500, i.e. the USB virtualization technology L4 port range for which server Sa is designed as handler, cf. first column of the rule table of the second forwarding element FE2.
In a sixth step the server Sa determines that he is unable to handle the device D.
In a seventh step the server Sa, in particular its M2M access manager AM informs the controller NC of this issue, i.e. that the server Sa cannot handle or mount device D.
In an eighth step the controller NC installs a new flow table entry in the second forwarding element FE2 to redirect network packets of the device D towards a different server which is likely to be able to mount the device D. Beforehand a server selection procedure was performed to determine a new server which can handle a device D. In the scenario of Fig. 8 and 9 this is server Sb. The corresponding new rule R is shown in Fig. 9 in the flow table in the first line with the USB device with L4 source port 22001 and L4 destination 1234 for the device D with IP address 1.1.1.100 as L3 source.
In a ninth step the network packets related to the device D are forwarded to server Sb which handles the device D.
In a tenth step the device D is finally mounted at the server Sb.

In summary the present invention enables a selection and usage seamlessly to the M2M area network of appropriate servers to act as virtual hosts of devices, preferably M2M devices by encoding information about the virtualized protocol inside L4 packet headers and using respective rules in intermediate switches together with M2M server selection function exploiting this encoded information.

The present invention further provides usage of an SDN control function to perform dynamic changes in the device target server, preferably M2M server selectively redirecting network flows originating from given devices since M2M devices are usually bound for the entire lifetime to an L4 level identifier that can be read by forwarding elements, preferably in form of SDN switches without using deep packet inspection.

In summary the present invention provides a method for attaching virtualized M2M devices to appropriately selected servers, preferably M2M servers using an anchor, preferably an M2M anchor with a special device attachment logic, one or more device virtualization aware M2M servers and a network controller including an SDN controller and an M2M controller wherein
said SDN controller can dynamically identify redirect network flows related to specific devices, preferably M2M devices, based on the encoding of both device-and device "group"-information in the network packet headers performed by said M2M anchor wherein the redirection is performed towards M2M servers which are selected based on their virtualization capabilities, their drivers/protocol stack and/or their networking status.

Or in other words the present invention provides a method to connect devices to serving hosts through a network supporting changing the service host during attachment phase, using artificially created device identifiers in the packets creating the data flow and reprogramming of network paths by involving a central control logic. The reply of the first addressed service host is analysed and a structure for matching the artificially created identifiers to serving hosts that support the corresponding device virtualization technologies is provided.

An identification of the network flows related to a device exploiting a new M2M anchor function, binding the device identification and additional device information in the existing network protocol packet headers is enabled. Further an M2M server function is provided that informs directly the network about the M2M server's ability to handle the connection from a given device.

The present invention has inter alia the following advantages: The present invention enables the network to recognize and manage the network flows related to device virtualization, preferably M2M device virtualization which is in contrast to conventional methods and systems where device managing happens at the application layer rather than at the network layer.

Furthermore the present invention provides an identification of network flows related to device virtualization without using costly deep packet inspection methods: Deep packet inspection methods would require a deployment of deep packet inspection functions in the network which are able to analyze all the network flows at line rate in order to identify the devices' network flows. Since such a method needs high computational costs and implementation with deep packing inspection would also require fairly extended support in the deep packet inspection engine for all the possible protocols for providing device virtualization executed by an anchor, the present invention can be easily implemented without expensive costs and without the need of a high computational effort.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for mounting a device (D) at a server (S) in a network (1), preferably in form of a M2M network, wherein the network (1) comprising
one or more anchors (A) for physically attaching devices (D),
one or more servers (S, Sa, Sb, Sc) for mounting devices (D), and
a network infrastructure (NI) in form of a software-defined network (SDN) for connecting said anchors (A) with said servers (S, Sa, Sb, Sc),
**characterized by** steps of:
a) Attaching a device (D) at an anchor (A),
b) Setting up a virtualized connection between the anchor (A) and a server (S) based on a predefined anchor configuration,
c) Encoding temporary device information into the network flow generated by said device (D), preferably including into the network flow for mounting,
d) Attempting to mount the device (D) at said server (S, Sa, Sb, Sc) and
e) Providing functions and/or data to the mounted device (D) by said server (S, Sa, Sb, Sc) upon successful mounting.
f) Selecting another server (S, Sa, Sb, Sc) for mounting the device (D) if mounting was not successful,
g) Identifying and redirecting the network flow of the said device (D) to said selected server (S, Sa, Sb, Sc) by installing one or more forwarding rules (R) on one or more forwarding elements (FE) of the software defined network (NI, SDN) using the temporary device information for identification of the network flow of the mounted device (D).

2. The method according to claim 1, **characterized in that** information about the device (D), its status and/or its virtualization technology is included into the temporary device information.

3. The method according to one of the claims 1-2, **characterized in that** an unambiguous value, preferably a predefined port range is used as temporary device information.

4. The method according to one of the claims 1-3, **characterized in that** a network controller (NC) receives the temporary device information from the server (S) having successfully mounted the device (D) and said network controller (NC) installs said forwarding rules (R) on said forwarding elements (FE).

5. The method according to one of the claims 1-4, **characterized in that** one or more predefined default servers (S, Sa, Sb, Sc) are configured in an anchor configuration for different virtualization technologies used by devices (D).

6. The method according to one of the claims 1-5, **characterized in that** for each device (D) attached at an anchor (A) a different outgoing port for its data traffic is used.

7. The method according to one of the claims 5-6, **characterized in that** the outgoing port number is evaluated for selecting the first server (S, Sa, Sb, Sc) according to step b).

8. The method according to one of the claims 1-7, **characterized in that** an L4-identifier of the device (D) is evaluated by the forwarding elements (FE) and matched to installed rules (R) for redirection of the data traffic of the device (D).

9. The method according to one of the claims 1-8, **characterized in that** the server (S, Sa, Sb, Sc) rejects an attach attempt of a device (D) and/or said another server (S, Sa, Sb, Sc) is selected based on a present and/or projected level of a constraint, preferably in form of a load.

10. The method according to one of the claims 1-9, **characterized in that** at the anchor (A) for each different virtualization technology the number of devices (D) is counted.

11. A network (1) preferably in form of a M2M network, wherein the network (1) comprising
one or more anchors (A) for physically attaching devices (D),
one or more servers (S, Sa, Sb, Sc) for mounting devices (D), and
a network infrastructure (NI) in form of a software-defined network (SDN) for connecting said anchors (A) with said servers (S, Sa, Sb, Sc),
**characterized by**
said anchors (1) operable to attach devices (D), to set up a virtualized connection between the anchor (A) and a server (S, Sa, Sb, Sc) based on a predefined anchor configuration and to encode temporary device information into the network flow generated by said device (D), preferably including the network flow for mounting,
said servers (S, Sa, Sb, Sc) operable to attempt to mount the device (D) at said server (S),
to provide functions and/or data to the mounted device (D) by said servers (S, Sa, Sb, Sc) upon successful mounting and to notify a network controller (NC) of the software defined network (NI, SDN) upon unsuccessful mounting, and said network controller (NC) being operable to select another server (S, Sa, Sb, Sc) for mounting the device (D) if mounting was not successful and to identify and redirect the network flow of the said device (D) to said selected server (S, Sa, Sb, Sc) by installing one or more forwarding rules (R) on one or more forwarding elements (FE) of the software defined network (NI, SDN) using the temporary device information for identification of the network flow of the mounted device (D).

## Patentansprüche

1. Ein Verfahren zum Einrichten eines Geräts (D) auf einem Server (S) in einem Netzwerk (1), vorzugsweise in Form eines M2M Netzwerks, wobei das Netzwerk (1) ein oder mehrere Anker (A) zum physikalischen Anschließen von Geräten (D) umfasst, ein oder mehrere Server (S, Sa, Sb, Sc) zum Einrichten von Geräten (D) und eine Netzwerkinfrastruktur (NI) in Form eines softwaredefinierten Netzwerks (SDN) zum Verbinden besagter Anker (A) mit besagten Servern (S, Sa, Sb, Sc), **gekennzeichnet durch** die Schritte:
a) Anschließen eines Geräts (D) an einem Anker (A),
b) Einrichten einer virtualisierten Verbindung zwischen dem Anker (A) und einem Server (S) basierend auf einer vorbestimmten Ankerkonfiguration,
c) Kodieren von temporären Geräteinformationen in den Netzwerkfluss, der durch besagtes Gerät (D) erzeugt wird, vorzugsweise durch Einbeziehen in den Netzwerkfluss zum Einrichten,
d) Versuchen das Gerät (D) auf besagtem Server (S, Sa, Sb, Sc) einzurichten und
e) Bereitstellen von Funktionen und/oder Daten dem eingerichteten Gerät (D) durch besagten Server (S, Sa, Sb, Sc) nach erfolgreichem Einrichten,
f) Auswählen eines anderen Servers (S, Sa, Sb, Sc) zum Einrichten des Geräts (D), falls das Einrichten nicht erfolgreich war,
g) Identifizieren und Umleiten des Netzwerkflusses des besagten Geräts (D) zu besagtem ausgewählten Server (S, Sa, Sb, Sc) durch Installieren einer oder mehrerer Weiterleitungsregeln (R) auf einem oder mehreren Weiterleitungselementen (FE) des softwaredefinierten Netzwerks (NI, SDN) unter Benutzung der temporären Geräteinformationen zur Identifikation des Netzwerkflusses des eingerichteten Geräts (D).

2. Das Verfahren gemäß Anspruch 1, **dadurch gekennzeichnet, dass** Informationen über das Gerät (D), seines Status und/oder seiner Virtualisierungstechnologie in die temporären Geräteinformationen einbezogen werden.

3. Das Verfahren gemäß einem der Ansprüche 1-2, **dadurch gekennzeichnet, dass** ein eindeutiger Wert, vorzugsweise ein vordefiniertes Portintervall, als temporäre Geräteinformation benutzt wird.

4. Das Verfahren gemäß einem der Ansprüche 1-3, **dadurch gekennzeichnet, dass** ein Netzwerk Controller (NC) die temporären Geräteinformationen von dem Server (S) erhält, der das Gerät (D) erfolgreich eingerichtet hat, und besagter Netzwerkcontroller (NC) installiert besagte Weiterleitungsregeln (R) auf besagten Weiterleitungselementen (FE).

5. Das Verfahren gemäß einem der Ansprüche 1-4, **dadurch gekennzeichnet, dass** ein oder mehrere vorbestimmte voreingestellte Server (S, Sa, Sb, Sc) in einer Ankerkonfiguration für verschiedene Virtualisierungstechnologien konfiguriert werden, die durch Geräte (D) benutzt werden.

6. Das Verfahren gemäß einem der Ansprüche 1-5, **dadurch gekennzeichnet, dass** für jedes Gerät (D), welches an einem Anker (A) angeschlossen ist, ein anderer Ausgangsport für seinen Datenverkehr benutzt wird.

7. Das Verfahren gemäß einem der Ansprüche 5-6, **dadurch gekennzeichnet, dass** die Ausgangsportnummer ausgewertet wird zum Auswählen des ersten Servers (S, Sa, Sb, Sc) gemäß Schritt b).

8. Das Verfahren gemäß einem der Ansprüche 1-7, **dadurch gekennzeichnet, dass** eine L4-Identifizierung des Geräts (D) durch die Weiterleitungselemente (FE) ausgewertet wird und mit installierten Regeln (R) zum Umleiten des Datenverkehrs des Geräts (D) verglichen wird.

9. Das Verfahren gemäß einem der Ansprüche 1-8, **dadurch gekennzeichnet, dass** der Server (S, Sa, Sb, Sc) einen Anschlussversuch eines Geräts (D) ablehnt und/oder besagter anderer Server (S, Sa, Sb, Sc) ausgewählt wird basierend auf einem gegenwärtigen und/oder vorhergesagten Schwellwert einer Randbedingung, vorzugsweise in Form einer Last.

10. Das Verfahren gemäß einem der Ansprüche 1-9, **dadurch gekennzeichnet, dass** auf dem Anker (A) für jede unterschiedliche Virtualisierungstechnologie die Anzahl von Geräten (D) gezählt wird.

11. Ein Netzwerk (1), vorzugsweise in Form eines M2M Netzwerks, wobei das Netzwerk (1) umfasst
ein oder mehrere Anker (A) zum physikalischen Anschließen von Geräten (D), ein oder mehrere Server (S, Sa, Sb, Sc) zum Einrichten von Geräten (D) und eine Netzwerkinfrastruktur (NI) in Form eines softwaredefinierten Netzwerks (SDN) zum Verbinden besagter Anker (A) mit besagten Servern (S, Sa, Sb, Sc), **gekennzeichnet durch**
besagte Anker (A), die ausgebildet sind, um Geräte (D) anzuschließen, um eine virtualisierte Verbindung zwischen dem Anker (A) und einem Server (S, Sa, Sb, Sc) basierend auf einer vordefinierten Ankerkonfiguration einzurichten und um temporäre Geräteinformationen in den Netzwerkfluss, der von besagten Gerät (D) erzeugt wird, zu kodieren, vorzugsweise in den Netzwerkfluss zum Einrichten einzubeziehen,
besagte Server (S, Sa, Sb, Sc), die ausgebildet sind, um zu versuchen, das Gerät (D) auf besagtem Server einzurichten, um Funktionen und/oder Daten dem eingerichteten Gerät (D) durch besagte Server (S, Sa, Sb, Sc) nach erfolgreichem Einrichten bereitzustellen, und einem Netzwerk Controller (NC) des softwaredefinierten Netzwerks (NI, SDN) ein erfolgloses Anschließen anzuzeigen, und
besagten Netzwerkcontroller (NC), der ausgebildet, einen anderen Server (S, Sa, Sb, Sc) zum Einrichten des Geräts (D) auszuwählen, wenn das Einrichten nicht erfolgreich war und den Netzwerkfluss des besagten Geräts (D) zu identifizieren und diesen zu besagtem ausgewählten Server (S, Sa, Sb, Sc) umzuleiten durch Installieren einer oder mehrerer Weiterleitungsregeln (FE) auf einem oder mehreren Weiterleitungselementen (FE) des softwaredefinierten Netzwerks (NI, SDN) unter Benutzung der temporären Geräteinformationen zur Identifikation des Netzwerkflusses des eingerichteten Geräts (D).

## Revendications

1. Procédé d'installation d'un dispositif (D) au niveau d'un serveur (S) dans un réseau (1), de préférence sous la forme d'un réseau M2M, dans lequel le réseau (1) comprend
un ou plusieurs points d'ancrage (A) pour rattacher physiquement des dispositifs (D),
un ou plusieurs serveurs (S, Sa, Sb, Sc) pour installer des dispositifs (D), et
une infrastructure réseau (NI) sous la forme d'un réseau défini par logiciel (SDN) pour connecter lesdits points d'ancrage (A) auxdits serveurs (S, Sa, Sb, Sc),
**caractérisé par** les étapes suivantes :
a) rattacher un dispositif (D) à un point d'ancrage (A),
b) établir une connexion virtualisée entre le point d'ancrage (A) et un serveur (S) sur la base d'une configuration d'ancrage prédéfinie,
c) coder des informations de dispositif temporaires dans le flux de réseau généré par ledit dispositif (D), de préférence incluses dans le flux de réseau pour l'installation,
d) tenter d'installer le dispositif (D) au niveau dudit serveur (S, Sa, Sb, Sc) et
e) fournir des fonctions et/ou des données au dispositif installé (D) par ledit serveur (S, Sa, Sb, Sc) en cas d'installation réussie,
f) sélectionner un autre serveur (S, Sa, Sb, Sc) pour installer le dispositif (D) si l'installation n'a pas réussi,
g) identifier et réacheminer le flux de réseau dudit dispositif (D) audit serveur sélectionné (S, Sa, Sb, Sc) en installant une ou plusieurs règles de transmission (R) sur un ou plusieurs éléments de transmission (FE) du réseau défini par logiciel (NI, SDN) en utilisant les informations de dispositif temporaires pour l'identification du flux de réseau du dispositif installé (D).

2. Procédé selon la revendication 1, **caractérisé en ce que** des informations concernant le dispositif (D), son état et/ou sa technologie de virtualisation sont inclus dans les informations de dispositif temporaires.

3. Procédé selon l'une quelconque des revendications 1 à 2, **caractérisé en ce qu'**une valeur sans ambiguïté, de préférence une plage de ports prédéfinie, est utilisée comme informations de dispositif temporaires.

4. Procédé selon l'une quelconque des revendications 1 à 3, **caractérisé en ce qu'**un contrôleur réseau (NC) reçoit les informations de dispositif temporaires du serveur (S) ayant installé avec succès le dispositif (D) et ledit contrôleur réseau (NC) installe lesdites règles de transmission (R) sur lesdits éléments de transmission (FE).

5. Procédé selon l'une quelconque des revendications 1 à 4, **caractérisé en ce qu'**un ou plusieurs serveurs par défaut prédéfinis (S, Sa, Sb, Sc) sont configurés dans une configuration d'ancrage pour différentes technologies de virtualisation utilisées par des dispositifs (D).

6. Procédé selon l'une quelconque des revendications 1 à 5, **caractérisé en ce que**, pour chaque dispositif (D) rattaché à un point d'ancrage (A), un port de sortie différent pour son trafic de données est utilisé.

7. Procédé selon l'une quelconque des revendications 5 à 6, **caractérisé en ce que** le numéro de port de sortie est évalué pour sélectionner le premier serveur (S, Sa, Sb, Sc) selon l'étape b).

8. Procédé selon l'une quelconque des revendications 1 à 7, **caractérisé en ce qu'**un identifiant L4 du dispositif (D) est évalué par les éléments de transmission (FE) et adapté à des règles installées (R) pour le réacheminement du trafic de données du dispositif (D).

9. Procédé selon l'une quelconque des revendications 1 à 8, **caractérisé en ce que** le serveur (S, Sa, Sb, Sc) rejette une tentative de rattachement d'un dispositif (D) et/ou ledit un autre serveur (S, Sa, Sb, Sc) est sélectionné sur la base d'un niveau présent et/ou prévu d'une contrainte, de préférence sous la forme d'une charge.

10. Procédé selon l'une quelconque des revendications 1 à 9, **caractérisé en ce qu'**au niveau du point d'ancrage (A) pour chaque technologie de virtualisation différente, le nombre de dispositifs (D) est compté.

11. Réseau (1) de préférence sous la forme d'un réseau M2M, dans lequel le réseau (1) comprenant
un ou plusieurs points d'ancrage (A) pour rattacher physiquement des dispositifs (D),
un ou plusieurs serveurs (S, Sa, Sb, Sc) pour installer des dispositifs (D), et
une infrastructure réseau (NI) sous la forme d'un réseau défini par logiciel (SDN) pour connecter lesdits points d'ancrage (A) auxdits serveurs (S, Sa, Sb, Sc),
est **caractérisé en ce que**
lesdits points d'ancrage (1) sont utilisables pour rattacher des dispositifs (D), pour établir une connexion virtualisée entre le point d'ancrage (A) et un serveur (S, Sa, Sb, Sc) sur la base d'une configuration d'ancrage prédéfinie et pour coder des informations de dispositif temporaires dans le flux de réseau généré par ledit dispositif (D), de préférence comprenant le flux de réseau pour l'installation,
lesdits serveurs (S, Sa, Sb, Sc) sont utilisables pour tenter d'installer le dispositif (D) au niveau dudit serveur (S),
pour fournir des fonctions et/ou des données au dispositif installé (D) par lesdits serveurs (S, Sa, Sb, Sc) en cas d'installation réussie et pour notifier un contrôleur réseau (NC) du réseau défini par logiciel (NI, SDN) en cas d'installation non réussie, et
ledit contrôleur réseau (NC) est utilisable pour sélectionner un autre serveur (S, Sa, Sb, Sc) pour installer le dispositif (D) si l'installation n'a pas réussi et pour identifier et réacheminer le flux de réseau dudit dispositif (D) audit serveur sélectionné (S, Sa, Sb, Sc) en installant une ou plusieurs règles de transmission (R) sur un ou plusieurs éléments de transmission (FE) du réseau défini par logiciel (NI, SDN) en utilisant les informations de dispositif temporaires pour l'identification du flux de réseau du dispositif installé (D).
